Europäisches Patentamt

European Patent Office

Office européen des brevets

(19)

(11) EP 0 807 824 A1

## (12) DEMANDE DE BREVET EUROPEEN

(43) Date de publication:
19.11.1997 Bulletin 1997/47

(51) Int. Cl.⁶: $G01P\ 5/00$, $G01F\ 1/66$

(21) Numéro de dépôt: 97201445.0

(22) Date de dépôt: 14.05.1997

(84) Etats contractants désignés:
AT BE CH DE DK ES FI FR GB IT LI NL PT SE

(30) Priorité: 17.05.1996 FR 9606258

(71) Demandeur:
SCHLUMBERGER INDUSTRIES S.A.
92120 Montrouge (FR)

(72) Inventeurs:
• De Vanssay, Robert
  91600 Savigny sur Orge (FR)
• Bazin, Alain
  94800 Villejuif (FR)
• Simon, Jean
  75012 Paris (FR)
• Beneteau, Lionel
  92260 Fontenay aux Roses (FR)

(54) **Dispositif ultrasonore de mesure de la vitesse d'écoulement d'un fluide**

(57) L'invention est relative à un dispositif ultrasonore de mesure de la vitesse d'écoulement d'un fluide, comprenant des premier et second transducteurs ultrasonores (1, 2) disposés en des points espacés selon la direction de l'écoulement du fluide, un module d'émission, un module de réception, et des moyens de commutation agencés de telle manière que chacun des premier et second transducteurs (1, 2) fonctionne alternativement en émetteur et en récepteur. Le module d'émission comporte au moins un générateur (100) de signal d'émission dont la sortie est reliée en permanence, par deux portes logiques (101, 102) suivies chacune d'un pont diviseur résistif (103, 104, 105, 106) respectivement à une première borne (21, 31) des premier et second transducteurs (1, 2), et en ce que des premier et second moyens de commutation (113, 114; 116, 117) sont interposés entre respectivement les premières bornes (21, 31) desdits premier et second transducteurs (1, 2) et le module de réception (110).

FIG.1

EP 0 807 824 A1

## Description

La présente invention a pour objet un dispositif ultrasonore de mesure de la vitesse d'écoulement d'un fluide, comprenant des premier et second transducteurs ultrasonores disposés en des points espacés selon la direction de l'écoulement du fluide, un module d'émission, un module de réception, un module d'alimentation électrique, un dispositif électronique de commande et des moyens de commutation agencés de telle manière que chacun des premier et second transducteurs fonctionne alternativement en émetteur et en récepteur, l'un des transducteurs fonctionnant en émetteur lorsque l'autre transducteur fonctionne en récepteur et vice versa.

Il est connu depuis de nombreuses années de mesurer le débit d'un fluide (ou son volume) s'écoulant dans une conduite en utilisant la propagation des signaux acoustiques émis entre deux transducteurs acoustiques situés en des points espacés dans la direction de l'écoulement du fluide. En principe, un signal acoustique émis du premier transducteur vers le second transducteur est reçu par ce second transducteur et le temps de propagation $T_1$ de ce signal acoustique est mesuré. De même, on mesure le temps de propagation $T_2$ d'un signal acoustique émis du second transducteur vers le premier transducteur après réception dudit signal par ce premier transducteur.

Dans un compteur de fluide, le débit peut être obtenu en combinant une mesure des temps de propagation des deux signaux acoustiques émis entre les deux points dans des directions opposées avec une mesure des déphasages acoustiques induits dans chaque signal acoustique par la propagation de chacun des signaux acoustiques dans l'écoulement. La demande de brevet européen n° 0 426 309 décrit un exemple d'un tel système de mesure de débit, dans lequel le signal reçu est échantillonné et converti numériquement, la mesure du déphasage acoustique étant effectuée en réalisant une détection synchrone du signal numérisé.

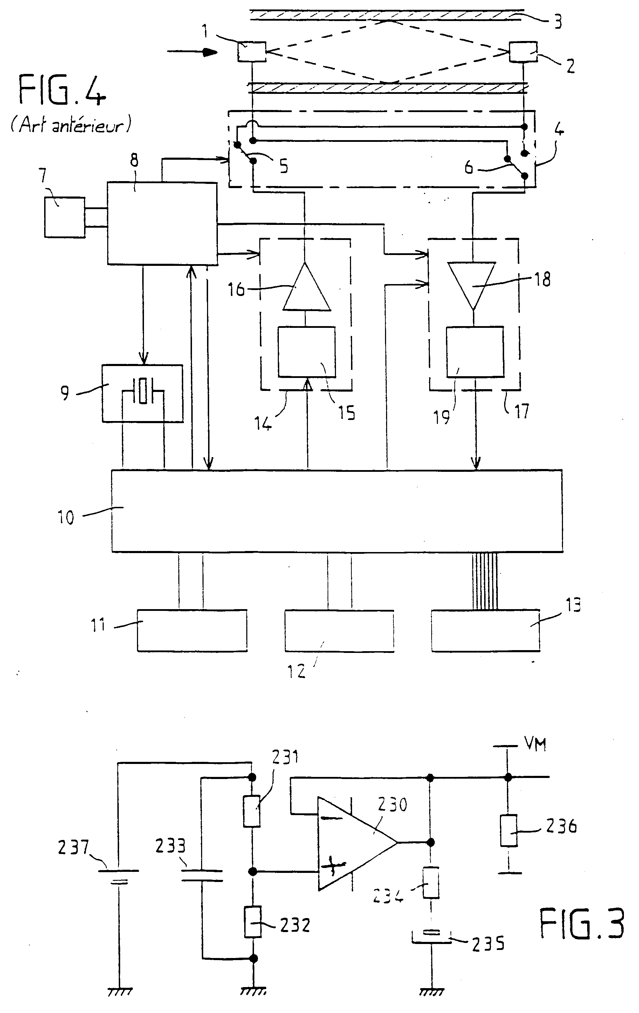

Différents types de circuits électroniques peuvent être utilisés pour assurer un comptage de fluide par une méthode de mesure à ultrasons de la vitesse d'écoulement du fluide. La Figure 4 montre le schéma de principe d'un exemple de tels circuits électroniques qui sont associés à deux transducteurs ultrasonores 1, 2 disposés à distance l'un de l'autre dans une conduite 3 dans laquelle s'écoule un fluide tel qu'un gaz. Les deux transducteurs 1, 2 sont reliés à un bloc de commutation 4 qui comprend deux commutateurs 5, 6 et permet l'utilisation de chaque transducteur alternativement comme émetteur et récepteur. Un module d'émission 14 et un module de réception 17 sont reliés respectivement aux commutateurs 5, 6 du bloc de commutation 4. Le module d'émission 14 comprend un amplificateur opérationnel 16 et un convertisseur numérique-analogique 15. Le module de réception 17 comprend au moins un amplificateur 18 et un convertisseur analogique-numérique 19 qui numérise et échantillonne, par exemple simultanément, le signal reçu. Une source d'énergie électrique 7 et un module 8 de gestion de l'alimentation électrique sont reliés notamment aux modules d'émission 14 et de réception 17 ainsi qu'au bloc de commutation 4 et à un dispositif électronique de commande tel qu'un microcontrôleur 10. Le microcontrôleur 10 comprend notamment une horloge à quartz 9, une unité arithmétique et logique, des circuits de mémoire vive et de mémoire morte, et peut coopérer avec des circuits d'affichage 13, une mémoire morte réinscriptible 12 et une liaison série 11 du type RS 232.

Les compteurs de gaz destinés à équiper chaque abonné d'un réseau de distribution doivent être à la fois précis, fiables et le meilleur marché possible. Ces contraintes imposent d'optimiser la réalisation des circuits électroniques et d'éviter l'utilisation de composants coûteux tels que par exemple des inductances ou des amplificateurs opérationnels munis d'organes de réglage, tout en garantissant une absence d'erreurs qui pourraient être dues par exemple à la présence de capacités parasites ou à un décalage du point zéro lié au fait que chaque transducteur n'est pas associé à la même impédance selon qu'il travaille en émetteur ou en récepteur.

L'invention vise à remédier à au moins un des inconvénients précités en proposant un dispositif ultrasonore de mesure de la vitesse d'écoulement d'un fluide, comprenant des premier et second transducteurs ultrasonores disposés en des points espacés selon la direction de l'écoulement du fluide, un module d'émission, un module de réception, un module d'alimentation électrique, un dispositif électronique de commande et des moyens de commutation agencés de telle manière que chacun des premier et second transducteurs fonctionne alternativement en émetteur et en récepteur, l'un des transducteurs fonctionnant en émetteur lorsque l'autre transducteur fonctionne en récepteur et vice versa, caractérisé en ce que le module d'émission comporte au moins un générateur de signal d'émission dont la sortie est reliée en permanence, par une première porte logique suivie d'un premier pont diviseur résistif, à une première borne du premier transducteur et, par une deuxième porte logique suivie d'un second pont diviseur résistif, à une première borne du second transducteur, des premier et second moyens de commutation sont interposés entre respectivement les premières bornes desdits premier et second transducteurs et le module de réception.

Le premier pont diviseur résistif comprend une première résistance connectée entre la première borne du premier transducteur et la sortie de la première porte logique, et dont la valeur est très supérieure à l'impédance de sortie de ladite première porte logique, le second pont diviseur résistif comprend une deuxième résistance connectée entre la première borne du second transducteur et la sortie de la seconde porte logique et dont la valeur est très supérieure à l'impédance de sortie de ladite seconde porte logique.

Les première et deuxième résistances présentent des valeurs identiques à moins de 0,1% près.

Les première et seconde portes logiques sont réalisées dans le même circuit intégré.

Le module de réception comporte un amplificateur non inverseur unique présentant une grande impédance d'entrée.

Les premier et deuxième moyens de commutation sont réalisés dans des circuits intégrés différents.

Les couplages capacitifs entre interrupteurs sont ainsi fortement réduits.

Selon un mode de réalisation avantageux, le premier moyen de commutation comprend des premier et deuxième interrupteurs montés en série entre ladite première borne du premier transducteur et l'entrée non inverseuse de l'amplificateur non inverseur, ainsi qu'un troisième interrupteur disposé entre un point commun aux premier et deuxième interrupteurs et un potentiel de référence, le troisième interrupteur étant ouvert lorsque les premier et deuxième interrupteurs sont fermés et vice versa, le deuxième moyen de commutation comprend des quatrième et cinquième interrupteurs montés en série entre ladite première borne du second transducteur et l'entrée non inverseuse de l'amplificateur non inverseur, ainsi qu'un sixième interrupteur disposé entre un point commun aux quatrième et cinquième interrupteurs et ledit potentiel de référence, le sixième interrupteur étant ouvert lorsque les quatrième et cinquième interrupteurs sont fermés et vice versa.

Ce mode de réalisation permet de diminuer les couplages à travers chaque interrupteur par les capacités de liaison.

Afin de réduire la consommation électrique, de préférence le dispositif comprend un module d'alimentation électrique pulsée et des premier et second interrupteurs additionnels connectés en parallèle respectivement sur les premier et second transducteurs, les premier et deuxième interrupteurs additionnels étant commandés pour être fermés de façon temporaire à chaque mise sous tension des premier et second transducteurs à partir du module d'alimentation électrique pulsée.

Selon un autre mode de réalisation particulier, le module d'alimentation électrique comprend une source d'énergie autonome comprenant au moins une pile et au moins un amplificateur pour définir un potentiel de référence constituant un point milieu par rapport à la tension disponible aux bornes de la source d'énergie autonome, l'ensemble des premier et second transducteurs et le module d'émission étant référencés par rapport à ce poténtiel de référence constituant un point milieu.

Dans ce cas, la première porte logique est subdivisée en des troisième et quatrième portes logiques identiques dont les entrées sont reliées en permanence au générateur de signal d'émission et les sorties sont reliées par des troisième et quatrième résistances de même valeur faisant partie du premier pont diviseur résistif à une première borne du premier transducteur dont une deuxième borne est reliée audit potentiel de référence et la deuxième porte logique est subdivisée en des cinquième et sixième portes logiques identiques dont les entrées sont reliées en permanence au générateur de signal d'émission et les sorties sont reliées par des cinquième et sixième résistances de valeurs identiques entre elles et à celles des troisième et quatrième résistances et faisant partie du second pont diviseur résistif à une première borne du second transducteur dont une deuxième borne est reliée audit potentiel de référence.

Selon encore un autre mode de réalisation, il est prévu des moyens pour créer une haute impédance vue aux bornes de chaque transducteur lorsqu'il émet afin de réduire davantage le couplage entre les transducteurs par l'intermédiaire du circuit électronique.

Un transistor est par exemple monté en collecteur comme aux bornes de chaque transducteur et une tension de saturation $V_{EC}$ est maintenue entre l'émetteur et le collecteur dudit transistor grâce à un courant constant saturant celui-ci.

Avantageusement, des moyens de mémorisation de la tension aux bornes de chaque transducteur sont respectivement placés en série avec les premier et second interrupteurs additionnels en parallèle respectivement sur les premier et second transducteurs afin d'éviter une chute de tension lors de la mise sous tension du dispositif.

D'autres caractéristiques et avantages de l'invention ressortiront de la description suivante de modes particuliers de réalisation de l'invention, donnés à titre d'exemples, en référence aux dessins annexés, sur lesquels :

- la Figure 1 représente le schéma d'une partie des circuits électroniques d'un dispositif de mesure de la vitesse d'écoulement d'un gaz, selon un premier mode de réalisation de l'invention,
- la Figure 2 représente le schéma d'une partie des circuits électroniques d'un dispositif de mesure de la vitesse d'écoulement d'un gaz, selon un deuxième mode de réalisation de l'invention,
- la Figure 3 représente le schéma d'un exemple de circuit électronique de création d'un point milieu de référence de tension, utilisable en combinaison avec les circuits électroniques de la Figure 2,
- la Figure 4 est une représentation, sous la forme d'un schéma-bloc, de l'ensemble d'un dispositif de comptage de gaz connu auquel est applicable la présente invention, et
- la Figure 5 représente le schéma d'une partie des circuits électroniques d'un dispositif de mesure de la vitesse d'écoulement d'un gaz, selon un troisième mode de réalisation de l'invention.

La présente invention concerne un dispositif de mesure de la vitesse d'écoulement d'un fluide, tel qu'un gaz, permettant d'assurer le comptage de la consommation de ce fluide, et met en oeuvre deux transducteurs ultrasonores 1, 2 disposés à distance l'un de l'autre à l'intérieur d'une conduite, dans le sens d'écoulement du fluide.

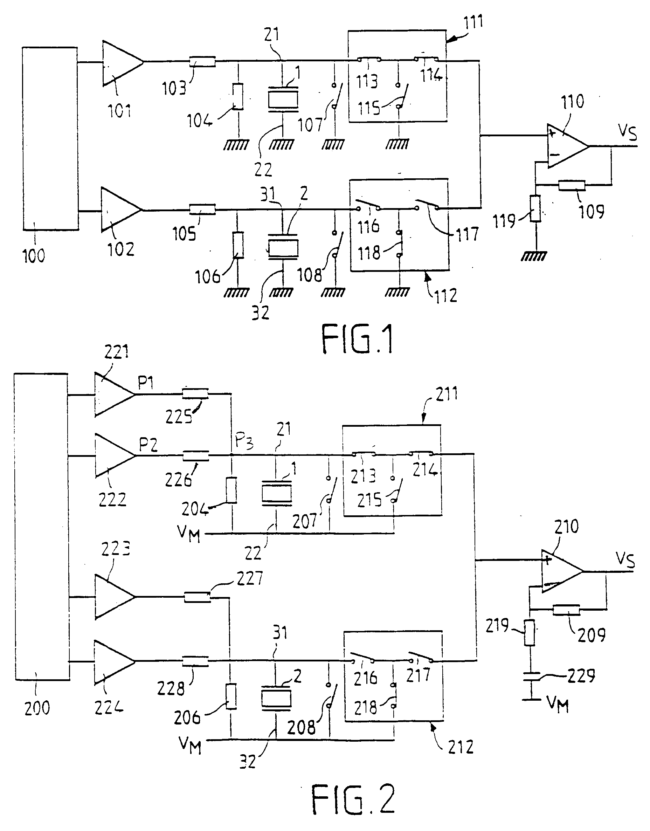

Chaque transducteur 1, 2 qui fonctionne avantageusement à une fréquence de l'ordre de 40 kHz, comporte une première borne reliée à un potentiel de référence qui, dans le mode de réalisation de la Figure 1, est la masse et, dans le mode de réalisation de la Figure 2, est un potentiel $V_M$ qui constitue un point milieu par rapport aux deux pôles d'une source d'énergie électrique constituée par une ou plusieurs piles. Une première borne 21, 31 de chaque transducteur 1, 2 est, conformément à l'invention, reliée en permanence à un circuit d'émission de signal et reliée par intermittence, par l'intermédiaire d'interrupteurs, à un circuit de réception unique, chaque transducteur 1, 2 agissant alternativement comme émetteur et récepteur.

La Figure 1 montre essentiellement, selon un premier mode de réalisation, les circuits électroniques d'émission, de commutation et d'amplification associés aux transducteurs 1 et 2. Ces circuits remplacent les modules 4, 16 et 18 du schéma de la Figure 4. On n'a pas représenté à nouveau sur la Figure 1 (ou sur la Figure 2 relative à un deuxième mode de réalisation), les circuits déjà mis en oeuvre de façon connue dans des dispositifs de comptage de gaz à transducteurs ultrasonores et illustrés sur la Figure 4, à savoir les circuits d'alimentation électrique 7, 8, les circuits 15, 19 de conversion numérique-analogique ou analogique-numérique, les mémoires ou compteurs associés aux circuits 15, 19, l'horloge à quartz 9 délivrant une fréquence de référence, le dispositif électronique de commande 10 tel que par exemple un microcontrôleur ou les périphériques ou interfaces de communication 11, 12, 13.

On voit sur la Figure 1 un générateur 100 de signal d'émission dont la sortie est reliée en permanence à des entrées de deux portes logiques 101, 102 réalisées par exemple dans le même circuit intégré. La réalisation des portes 101, 102 dans un même circuit intégré permet d'avoir pour ces portes des temps de transit et des impédances de sortie les plus similaires possibles. Les impédances de sortie des portes 101, 102 ne peuvent toutefois pas être connues avec une grande précision et des écarts résiduels peuvent exister entre les impédances de sortie des portes 101, 102. Pour réduire ce risque, des résistances 103, 105 sont connectées entre les sorties des portes 101, 102 et les premières bornes 21, 31 des transducteurs 1, 2 dont les deuxièmes bornes 22, 32 sont connectées à la masse. Les résistances 103, 105 présentent elles-mêmes des valeurs identiques à moins de 0,1% près, ce qui est facile et peu coûteux à obtenir pour des composants simples de ce type. Pour réduire l'influence des écarts éventuels entre les impédances de sortie des portes 101, 102, les résistances 103, 105 présentent des valeurs très supérieures à ces impédances de sortie.

A titre d'exemple, les résistances 103, 105 peuvent présenter des valeurs de l'ordre de 10 kilo ohms tandis que les impédances de sortie des portes logiques 101, 102 peuvent être de l'ordre de 60 ohms. De la sorte, les impédances vues des transducteurs 1, 2 peuvent être très proches même si, en pourcentage, les impédances de sortie des portes logiques 101, 102 peuvent présenter des variations significatives.

Les résistances 103, 105 font partie de ponts diviseurs résistifs qui comprennent chacun une deuxième résistance 104, 106 montée en parallèle sur le transducteur correspondant 1, 2. Les valeurs des résistances de chaque pont diviseur résistif 103, 104; 105, 106 sont déterminées de manière à fournir à chacun des transducteurs 1, 2 un signal d'émission d'amplitude requise.

Une telle configuration (pont diviseur résistif entre chaque porte logique reliée au générateur de signal d'émission et une borne d'un transducteur) présente l'avantage d'être simple et peu coûteuse compte tenu des composants qui sont utilisés. Par ailleurs, le dispositif ainsi configuré est fiable et précis tout en ne nécessitant que peu d'énergie pour son fonctionnement.

Le module de réception comporte un amplificateur non inverseur unique 110 qui présente une grande impédance d'entrée, ce qui permet d'utiliser, entre les premières bornes 21, 31, des transducteurs 1, 2 et l'entrée non inverseuse de l'amplificateur 110, des interrupteurs 111, 112 dont les faibles impédances peuvent présenter de petites disparités entre elles sans que cela influe sur la qualité du montage. Des résistances 109, 119 sont associées à l'amplificateur opérationnel 110 de façon classique.

Étant donné que l'impédance des interrupteurs 111, 112 est très faible par rapport à l'impédance d'entrée de l'amplificateur 110 il n'est pas nécessaire d'appairer les interrupteurs ce qui permet de réduire considérablement le coût du dispositif ainsi obtenu.

Les interrupteurs 111, 112 sont réalisés dans des circuits intégrés différents, ce qui les rend insensibles aux couplages capacitifs habituels qui existent entre des interrupteurs intégrés dans un même circuit et un même boîtier. Afin de limiter encore les risques de couplage entre le signal d'émission et le signal de réception, selon un mode particulier de réalisation, les interrupteurs 111, 112 présentent une structure en T qui limite les couplages par capacité de liaison au sein de chaque bloc d'interrupteurs 111, 112.

Ainsi, comme on peut le voir sur la Figure 1, le bloc d'interrupteurs 111 comprend des interrupteurs 113, 114 montés en série entre la borne 21 du transducteur 1 et l'entrée non inverseuse de l'amplificateur 110 et un troisième interrupteur 115 monté entre un point commun aux interrupteurs 113, 114 et la masse qui constitue, dans ce mode de réalisation, le potentiel de référence pour la borne 22 du transducteur 1. De la même façon, le bloc d'interrupteurs 112 comprend des interrupteurs 116, 117 montés en série entre la borne 31 du transducteur 2 et l'entrée non inverseuse de l'amplificateur 110 et un troisième interrupteur 118 monté entre un point commun aux interrupteurs 116, 117 et la masse, c'est-à-dire le potentiel de référence de la borne 32 du transducteur 2.

En position ouverte de l'interrupteur 111, respectivement 112, les interrupteurs 113, 114, respectivement 116, 117, sont ouverts tandis que l'interrupteur 115, respectivement 118, est fermé afin de maintenir un potentiel fixe (la masse) à une borne de l'interrupteur 114, respectivement 117, ce qui diminue notablement le couplage.

En position fermée de l'interrupteur 111, respectivement 112, les interrupteurs 113, 114, respectivement 116, 117, sont fermés tandis que l'interrupteur 115, respectivement 118, est ouvert.

Sur la Figure 1, on a représenté le bloc d'interrupteurs 111 en position fermée et le bloc d'interrupteur 112 en position ouverte.

Les différentes caractéristiques décrites ci-dessus permettent de définir, pour les deux transducteurs 1, 2, des impédances de circuit d'émission et de circuit de réception qui sont égales et le couplage électronique entre le signal d'émission et le signal reçu est inexistant ou limité au minimum.

Pour limiter davantage encore la consommation des circuits électroniques, ceux-ci fonctionnent avantageusement avec une alimentation pulsée. Dans ce cas, il faut éviter d'exciter les transducteurs 1, 2 à la mise sous tension lorsqu'apparaissent des signaux transitoires. Pour cela, des interrupteurs additionnels 107, 108 sont montés en parallèle sur les transducteurs 1, 2 respectivement. A la mise sous tension, l'un des blocs d'interrupteurs 111, 112, par exemple le bloc d'interrupteurs 112, est en position ouverte tandis que l'autre bloc d'interrupteurs 111, 112 (c'est-à-dire le bloc d'interrupteurs 111 dans l'exemple considéré) est en position fermée. Lors de cette mise sous tension, les interrupteurs additionnels 107, 108 sont tous les deux en position fermée. De la sorte, il est maintenu une résistance la plus faible possible aux bornes des transducteurs 1, 2 lors de la mise sous tension pour que les signaux transitoires n'excitent pas les transducteurs 1, 2.

Les Figures 2 et 3 montrent un deuxième mode de réalisation de l'invention, dans lequel les circuits sont alimentés par des piles 237, délivrant une tension définie, par exemple de 2,5 V ou 3 V, et un circuit, tel que celui illustré sur la Figure 3, crée un point milieu au potentiel $V_M$, qui constitue le potentiel de référence pour les transducteurs 1, 2.

La Figure 3 montre un amplificateur opérationnel 230 dont l'entrée non inverseuse est connectée au point commun des résistances 231, 232 d'un pont diviseur résistif alimenté par les piles 237. Un condensateur 233 est monté en parallèle sur les piles 237. La sortie de l'amplificateur est reliée à la masse par une résistance 234 de faible valeur et un condensateur 235. L'entrée inverseuse de l'amplificateur 230 est reliée à la sortie de l'amplificateur 230 qui fournit la tension de référence $V_M$. Une résistance 236 est connectée entre la borne au potentiel de référence $V_M$ et la masse.

Dès lors que les transducteurs 1, 2 sont référencés par rapport à un potentiel de référence $V_M$, les circuits d'émission d'un signal doivent aussi être référencés par rapport à ce point. La Figure 2 montre des circuits d'émission et de réception associés à des transducteurs 1, 2 et adaptés au cas où le potentiel de référence $V_M$ est différent de la masse.

L'amplificateur de réception 210 avec ses résistances 209, 219 peut être tout à fait analogue à l'amplificateur de réception 110 et ses résistances 109, 119. Toutefois, la résistance 219 peut être reliée par un condensateur 229 au potentiel de référence $V_M$. Les blocs d'interrupteurs 211, 212 avec les interrupteurs 213 à 215 et respectivement 216 à 218 sont identiques aux blocs d'interrupteurs 111, 112 avec les interrupteurs 113 à 115 et 116 à 118. Toutefois, les interrupteurs 215 et 218 sont reliés au potentiel de référence $V_M$ et non à la masse comme les interrupteurs 115 et 118. De la même façon, les interrupteurs additionnels 207, 208 sont semblables aux interrupteurs additionnels 107, 108 mais sont reliés au potentiel de référence $V_M$ plutôt qu'à la masse. Les résistances 204, 206 des ponts diviseurs associés aux transducteurs 1 et 2 sont également semblables aux résistances 104, 106 mais sont connectées respectivement aux bornes 22, 32 des transducteurs 1, 2 qui sont au potentiel de référence $V_M$.

Pour tenir compte de l'existence d'un potentiel de référence constitué par un point milieu $V_M$, le générateur de signal d'émission 200 est relié aux entrées de deux paires de portes logiques 221, 222 et 223, 224. Ces portes logiques 221, 222, 223, 224 sont de préférence réalisées dans le même circuit intégré. La sortie de la porte logique 221, respectivement 222, est reliée par une résistance 225, respectivement 226, à l'extrémité de la résistance 204 non reliée au potentiel de référence $V_M$, et à la borne 21 du transducteur 1. La sortie de la porte logique 223, respectivement 224, est de façon similaire reliée par une résistance 227, respectivement 228, à l'extrémité de la résistance 206 non reliée au potentiel de référence $V_M$, et à la borne 31 du transducteur 2.

Comme dans le cas du mode de réalisation de la Figure 1, les résistances 225, 226, 227, 228 présentent des valeurs égales entre elles à 0,1% près et ont des valeurs très supérieures aux impédances de sortie des portes logiques 221 à 224 afin de garantir un décalage nul du point zéro lors de la mesure de vitesse.

Dès lors que le potentiel de référence $V_M$ est égal à la moitié de la tension d'alimentation Valim des piles 237, et que les résistances 225 à 228 présentent des valeurs égales entre elles, le potentiel $P_3$ appliqué à la borne 21 du transducteur 1, respectivement à la borne 31 du transducteur 2, est égal à la moyenne des potentiels $P_1$ et $P_2$ en sortie des portes 221 et 222, respectivement des portes 223 et 224.

Si $P_1 = 0$ et $P_2 = Valim$, alors $P_3 = V_M$. Dans ce cas, il ne peut pas y avoir d'émission sur le transducteur concerné.

Une émission se produit lorsque l'on a, pour les composants associés à un transducteur donné, $P_1 = Valim$ et $P_2 = Valim$, donc $P_3 = Valim$, puis $P_1 = 0$ et $P_2 = 0$, donc $P_3 = 0$.

Les différentes mesures préconisées dans le cadre de la présente invention garantissent un fonctionnement sans décalage de zéro en réalisant de façon simple et économique des circuits sans dissymétrie, et en même temps permettent de réaliser des circuits économes en énergie pouvant fonctionner avec de petites piles d'alimentation présentant une durée de vie de plusieurs années.

Les portes logiques 101, 102 ou 221 à 224 peuvent être de simples portes inverseuses rapides avec des temps de réponse de l'ordre de quelques nanosecondes. Les résistances 103, 105 et 225 à 228 peuvent être constituées par des composants discrets bon marché malgré les exigences d'homogénéité dans leurs valeurs. Les interrupteurs 111, 112 et 211, 212 ne sont eux-mêmes pas soumis à des contraintes drastiques dans leurs caractéristiques, dès lors que l'amplificateur de réception 110, 210 présente une impédance d'entrée très élevée, de l'ordre de quelques gigaohms. Par suite, les interrupteurs peuvent aussi être constitués par des composants bon marché. L'amélioration des propriétés des circuits électroniques selon l'invention peut ainsi se faire sans augmentation de la complexité ni du coût.

En outre, le dispositif de mesure selon l'invention est à même d'être incorporé dans un dispositif de comptage de gaz placé chez un abonné d'un réseau de distribution.

Dans les dispositifs représentés sur les figures 1 et 2, il subsiste malgré tout un certain couplage par l'intermédiaire du circuit entre le transducteur qui émet et celui qui reçoit.

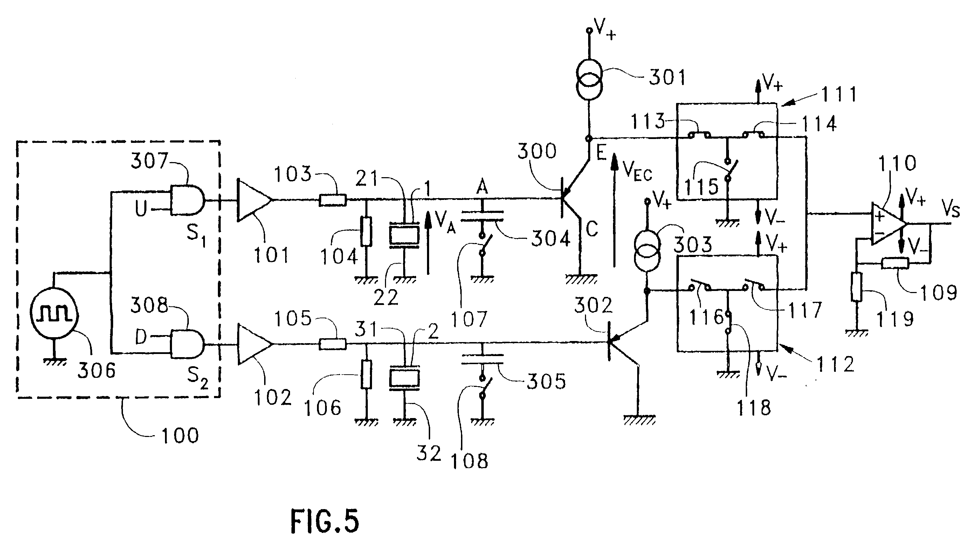

Afin de réduire davantage l'intensité du courant de couplage il est prévu de placer entre la borne 21 non reliée à la masse du transducteur 1 de la figure 1 et le boitier 111 un transistor 300 monté en collecteur commun et dont la base est reliée à ladite borne (Fig.5). L'émetteur E de ce transistor est relié, d'une part, à une source de courant 301 et, d'autre part, au boitier 111 et le collecteur C dudit transistor est relié à la masse.

Le transistor 300 présente une grande impédance d'entrée vue par le transducteur 1 émetteur ce qui améliore de manière simple le découplage entre les deux voies du circuit dans lesquelles sont installés les transducteurs. D'autres moyens plus compliqués permettent également de créer une grande impédance aux bornes de chaque transducteur.

Un transistor 302 et une source de courant 303 identiques sont prévus sur l'autre voie où est installé le transducteur 2 entre l'interrupteur 108 et le boitier 112 afin d'obtenir un montage aussi symétrique que possible.

Les deux sources de courant 301 et 303 sont appairées au pourcent près.

En outre, toute variation de courant au niveau de l'émetteur d'un transistor est reportée à la base de celui-ci en étant divisée par le gain dudit transistor.

Sur la figure 5, les éléments non modifiés de la figure 1 conservent leurs références. Le fait d'introduire ces transistors dans le dispositif présente également l'avantage de pouvoir utiliser une alimentation non symétrique (par exemple du type $V_+ = 3V$ et $V_- = 0$) pour alimenter les interrupteurs et l'amplificateur de réception 110 ce qui réduit le coût économique et la consommation énergétique d'un tel dispositif par rapport à un dispositif dans lequel une alimentation symétrique du type (+3V, -3V) est nécessaire.

Ceci est rendu possible grâce à la présence d'un transistor dont la tension de saturation entre émetteur et collecteur est maintenue grâce à un courant constant saturant ledit transistor ce qui ajoute une tension continue au signal reçu et ainsi amène la valeur moyenne du signal obtenu à $V_{EC}$ au lieu d'une valeur nulle.

Par ailleurs, lors de la mise sous tension du dispositif selon la figure 1, 2 ou 5 (avant d'envoyer le signal d'émission), l'interrupteur 107 est fermé et la tension $V_A$ aux bornes du transducteur 1 varie brutalement d'une valeur fixe à 0 ce qui provoque une oscillation du transducteur 1 et également de l'amplificateur de réception 110.

Afin de remédier à ce problème des moyens de mémorisation formés par exemple par une capacité 304 (resp.305) sont installés en série avec l'interrupteur 107 (resp.108) et permettent ainsi de maintenir la tension $V_A$ aux bornes du transducteur 1 lors de la mise sous tension du dispositif.

La figure 5 représente également de manière plus détaillée le générateur 100 de signal d'émission de la figure 1 ou 200 de la figure 2.

Ainsi, le générateur de signal d'émission 100 comprend un générateur 306 qui envoie des signaux carrés respectivement sur deux entrées de deux portes logiques "ET" 307, 308, les autres entrées de ces portes recevant respectivement un signal de commande numérique U, D.

Chaque porte 307, 308 délivrant en sortie un signal $S_1$, $S_2$ en fonction de la valeur 0 ou 1 des signaux de commande U et D.

**Revendications**

1. Dispositif ultrasonore de mesure de la vitesse d'écoulement d'un fluide, comprenant des premier et second transducteurs ultrasonores (1, 2) disposés en des points espacés selon la direction de l'écoulement du fluide, un module d'émission, un module de réception, un module d'alimentation électrique (7, 8), un dispositif électronique de commande (10) et des moyens de commutation agencés de telle manière que chacun des premier et second transducteurs (1, 2) fonctionne alternativement en émetteur et en récepteur, l'un des transducteurs (1, 2) fonctionnant en émetteur lorsque l'autre transducteur (1, 2) fonctionne en récepteur et vice versa, caractérisé en ce que le module d'émission comporte au moins un générateur (100) de signal d'émission dont la sortie est reliée en permanence, par une première porte logique (101) suivie d'un premier pont diviseur résistif (103, 104), à une première borne (21) du premier transducteur (1) et, par une deuxième porte logique (102) suivie d'un second pont diviseur résistif (105, 106), à une première borne (31) du second transducteur (2), et en ce que des premier et second moyens de commutation (113, 114; 116, 117) sont interposés entre respectivement les premières bornes (21, 31) desdits premier et second transducteurs (1, 2) et le module de réception (110).

2. Dispositif selon la revendication 1, caractérisé en ce que le premier pont diviseur résistif (103, 104) comprend une première résistance (103) connectée entre la première borne (21) du premier transducteur (1) et la sortie de la première porte logique (101) et dont la valeur est très supérieure à l'impédance de sortie de ladite première porte logique (101) et en ce que le second pont diviseur résistif (105, 106) comprend une deuxième résistance (105) connectée entre la première borne (31) du second transducteur (2) et la sortie de la seconde porte logique (102) et dont la valeur est très supérieure à l'impédance de sortie de ladite seconde porte logique (102).

3. Dispositif selon la revendication 2, caractérisé en ce que les première et deuxième résistances (103, 105) présentent des valeurs identiques à moins de 0,1% près.

4. Dispositif selon l'une quelconque des revendications 1 à 3, caractérisé en ce que les première et seconde portes logiques (101, 102) sont réalisées dans le même circuit intégré.

5. Dispositif selon l'une quelconque des revendications 1 à 4, caractérisé en ce que le module de réception comporte un amplificateur non inverseur unique (110) présentant une grande impédance d'entrée.

6. Dispositif selon la revendication 5, caractérisé en ce que les premier et deuxième moyens de commutation (113, 114; 116, 117) sont réalisés dans des circuits intégrés différents.

7. Dispositif selon la revendication 5 ou 6, caractérisé en ce que le premier moyen de commutation comprend des premier et deuxième interrupteurs (113, 114) montés en série entre ladite première borne (21) du premier transducteur (1) et l'entrée non inverseuse de l'amplificateur non inverseur (110), ainsi qu'un troisième interrupteur (115) disposé entre un point commun aux premier et deuxième interrupteurs (113, 114) et un potentiel de référence, le troisième interrupteur (115) étant ouvert lorsque les premier et deuxième interrupteurs (113, 114) sont fermés et vice versa, et en ce que le deuxième moyen de commutation comprend des quatrième et cinquième interrupteurs (116, 117) montés en série entre ladite première borne (31) du second transducteur (2) et l'entrée non inverseuse de l'amplificateur non inverseur (110), ainsi qu'un sixième interrupteur (118) disposé entre un point commun aux quatrième et cinquième interrupteurs (116, 117) et ledit potentiel de référence, le sixième interrupteur (118) étant ouvert lorsque les quatrième et cinquième interrupteurs (116, 117) sont fermés et vice versa.

8. Dispositif selon l'une quelconque des revendications 1 à 7, caractérisé en ce qu'il comprend un module d'alimentation électrique pulsée (7, 8) et des premier et second interrupteurs additionnels (107, 108) connectés en parallèle respectivement sur les premier et second transducteurs (1, 2), les premier et deuxième interrupteurs additionnels (107, 108) étant commandés pour être fermés de façon temporaire à chaque mise sous tension des premier et second transducteurs (1, 2) à partir du module d'alimentation électrique pulsée (7, 8).

9. Dispositif selon l'une quelconque des revendications 1 à 8, caractérisé en ce que le module d'alimentation électrique (7, 8) comprend une source d'énergie autonome comprenant au moins une pile (237) et au moins un amplificateur (230) pour définir un potentiel de référence ($V_M$) constituant un point milieu par rapport à la tension disponible aux bornes de la source d'énergie autonome (237), l'ensemble des premier et second transducteurs (1, 2) et le module d'émission (200) étant référencés par rapport à ce potentiel de référence constituant un point milieu ($V_M$).

10. Dispositif selon la revendication 9, caractérisé en ce que la première porte logique est subdivisée en des troisième et quatrième portes logiques identiques (221, 222) dont les entrées sont reliées en permanence au générateur (200) de signal d'émission et les sorties sont reliées par des troisième et quatrième résistances de même valeur (225, 226) faisant partie du premier pont diviseur résistif (225, 226, 204) à une première borne (21) du premier transducteur (1) dont une deuxième borne (22) est reliée audit potentiel de référence ($V_M$) et en ce que la deuxième porte logique est subdivisée en des cinquième et sixième portes logiques identiques (223, 224) dont les entrées sont reliées en permanence au générateur (200) de signal d'émission et les sorties sont reliées par des cinquième et sixième résistances (227, 228) de valeurs identiques entre elles et à celles des troisième et quatrième résistances (225, 226) et faisant partie du second pont diviseur résistif (227, 228, 206) à une première borne (31) du second transducteur (2) dont une deuxième borne (32) est reliée audit potentiel de référence ($V_M$).

11. Dispositif selon l'une des revendications 1 à 10, caractérisé en ce que le dispositif comprend des moyens (300, 302) pour créer une haute impédance vue aux bornes de chaque transducteur lorsqu'il émet afin de découpler les deux transducteurs l'un par rapport à l'autre.

12. Dispositif selon la revendication 11, caractérisé en ce qu'un transistor (300, 302) est monté en collecteur commun aux bornes de chaque transducteur (1, 2) et une tension de saturation $V_{EC}$ est maintenue entre l'émetteur et le collecteur dudit transistor grâce à un courant constant saturant celui-ci.

13. Dispositif selon la revendication 12, caractérisé en ce que les deux transistors (300, 302) sont disposés respectivement entre les premiers et second moyens de commutation (113, 114 ; 116, 117) et les transducteurs (1, 2), les bases des transistors étant respectivement reliés aux bornes (21, 31) des transducteurs et les émetteurs des deux transistors (300, 302) étant respectivement reliés à deux sources de courant appairées (301, 303) et aux premiers et second moyens de commutation (113, 114; 116, 117).

14. Dispositif selon l'une des revendications 8 à 13, caractérisé en ce que des moyens de mémorisation de la tension aux bornes de chaque transducteur (1, 2) sont respectivement placés en série avec les premiers et second interrupteurs additionnels (107, 108) en parallèle respectivement sur les premiers et second transducteurs (1, 2).

FIG.1

FIG.2

# FIG.4
## (Art antérieur)

# FIG.3

FIG.5

Office européen
des brevets

**RAPPORT DE RECHERCHE EUROPEENNE**

Numero de la demande

EP 97 20 1445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 187 839 A (BROOKES & GATEHOUSE LIMITED) <br> * page 2, ligne 52-60; figure 2 * <br> --- | 1 | G01P5/00 <br> G01F1/66 |
| A | GB 2 061 510 A (PANAMETRICS INC.) <br> * page 4, ligne 37-49 * <br> * page 5, ligne 52-57; figure 3 * <br> --- | 1 | |
| A,D | EP 0 426 309 A (BRITISH GAS PLC) <br> * page 3, ligne 1-6; figure 1 * <br> --- | 1 | |
| A | US 4 835 771 A (MOUSSIE MICHEL) 30 mai 1989 <br> * colonne 3, ligne 27-66; figures 1,2A * <br> --- | 11-13 | |
| A,P | PATENT ABSTRACTS OF JAPAN <br> vol. 096, no. 011, 29 novembre 1996 <br> & JP 08 186481 A (MATSUSHITA ELECTRIC IND CO LTD), 16 juillet 1996, <br> * abrégé * <br> ----- | 11,13,14 | |

| | |
|---|---|
| | DOMAINES TECHNIQUES RECHERCHES (Int.Cl.6) |
| | G01P <br> G01F |

Le présent rapport a été établi pour toutes les revendications

| Lieu de la recherche | Date d'achèvement de la recherche | Examinateur |
|---|---|---|
| LA HAYE | 22 septembre 1997 | Hansen, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................

& : membre de la même famille, document correspondant

EPO FORM 1503 03.82 (P04C02)